# FASCICULE DE BREVET EUROPEEN

(11) **EP 0 773 153 B1**
(45) Date de publication et mention de la délivrance du brevet: **06.02.2002**
(21) Numéro de dépôt: 96402409.5
(22) Date de dépôt: 12.11.1996
(51) Int. Cl.: B61K 5/02, B61D 15/00, B62D 55/02

(54) **Plate-forme mobile pour le franchissement de dénivellations en degré**
Bewegliche Plattform für die Überwachung von Höhenunterschieden
Mobile platform for surmounting height deviations

(30) Priorité: 13.11.1995 FR 9513405
(43) Date de publication de la demande: 14.05.1997
(73) Titulaire: Regie Autonome des Transports Parisiens RATP, 75012 Paris (FR)
(72) Inventeur: Charbuillet, Jean-Paul, Janville sur Juine, 91510 Lardy (FR); Boulogne, Daniel, 91310 Linas (FR); Brunet, Jean-Marc, 77200 Torcy (FR); Lecam, Joel, 95400 Arnouville les Gonesse (FR); Vialle, Jean-Claude, 77700 Coupvray (FR)
(74) Mandataire: Jacobson, Claude

(56) Documents cités:
- EP-A- 0 124 180
- FR-A- 2 467 718
- US-A- 3 035 529
- US-A- 3 392 681

## Description

L'invention concerne les plates-formes mobiles, et plus précisément les plates-formes porteuses automotrices aptes à franchir des dénivellations en degré, et notamment une telle plate-forme adaptée à transporter une machine d'intervention sur les voies ferrées et dans les tunnels ferroviaires, d'un quai à une voie en contrebas et inversement, et également sur les voies et d'une voie à une autre.

Actuellement, pour transporter les machines d'intervention sur les voies ferrées, on met en oeuvre un appareillage constitué d'éléments plutôt disparates. On connaît par exemple un appareillage comprenant d'une part un véhicule monté sur des roues à boudin adaptées à circuler longitudinalement sur les rails et portant un plateau élévateur dont le contour déborde largement ces roues et lui-même muni à ses extrémités de roues à boudin orientées perpendiculairement aux premières pour circuler transversalement, et, d'autre part, indépendamment, des tréteaux dont les pieds sont munis de patins emboîtables sur les rails de la voie et dont la hauteur est telle que le sommet affleure alors le niveau du quai, lequel sommet est adapté à porter des rails modulaires que l'on peut déployer transversalement à la voie continûment de ce sommet au quai et sur le quai sur une longueur de quelques mètres ; la machine d'intervention étant placée sur le plateau élévateur du véhicule disposé sur le quai parallèlement à la voie, ce plateau est amené en position haute, les tréteaux sont mis en place sur les rails, et leurs propres rails modulaires sont déployés transversalement à la voie jusque sous les roues de circulation transversale du plateau élévateur ; le plateau est alors rétracté jusqu'à ce que ces roues prennent appui sur les rails transversaux, et le mouvement de rétraction est poursuivi jusqu'à ce que les roues à boudin du véhicule lui-même soient décollées du quai ; le véhicule est ensuite mu transversalement jusqu'à ce qu'il parvienne sur les tréteaux au-dessus de la voie, et son actionnement vers sa position d'extension amène tout d'abord les roues du véhicule en contact avec la voie, puis le décollement des roues transversales du plateau, des rails transversaux portés par les tréteaux ; ces rails modulaires sont alors enlevés ainsi que les tréteaux, et le plateau est amené à la hauteur souhaitée pour que la machine puisse intervenir sur la voie ou au contraire sur la voûte du tunnel. Les opérations d'entreposage du matériel en fin d'intervention sont effectuées naturellement en sens inverse.

Comme on le voit, cette mise en oeuvre est longue, assez complexe, et demande l'intervention d'un personnel nombreux et expérimenté car certaines opérations demandent une grande précision pour pouvoir être exécutées sans risques de blessures pour les personnes ou d'endommagement du matériel. De plus, l'entreposage du matériel pendant les heures de trafic est également problématique.

On connaît également, par le document EP-A-0 124 180, une plate-forme porteuse automotrice comprenant, outre des moyens moteurs, une ossature, et, solidarisées à l'ossature, d'une part des roues ou des chenilles pour déplacer la plate-forme sur terre, et d'autre part des roues à boudin ajustables en direction verticale par rapport à l'ossature, orientées transversalement aux roues de déplacement sur terre, pour la déplacer le long de rails ; cette plate-forme comporte un dispositif de poussée consistant de préférence en un vérin comprenant une partie montée pivotante sur l'ossature et une partie extensible vers le bas pour prendre appui sur le sol et ainsi provoquer le déplacement de la plate-forme en la faisant rouler ou/et basculer par exemple sur le sommet d'un talus. Cette plate-forme n'est pas conçue pour franchir des dénivellations en degré, et pas susceptible de franchir de telles dénivellations, ce qui entraîne qu'elle est par exemple inapte à se déplacer par ses propres moyens d'un quai à une voie en contrebas et inversement.

L'invention a pour but de remédier à ces inconvénients et concerne à cet effet une plate-forme porteuse automotrice pour le franchissement de dénivellations en degré, du type comprenant une ossature, des moyens moteurs, et, solidarisés à l'ossature, au moins deux groupes de moyens d'entraînement actionnables par les moyens moteurs pour déplacer la plate-forme sur le sol et l'entraîner sélectivement respectivement dans au moins deux directions différentes, les moyens d'entraînement d'au moins l'un des groupes étant solidarisés à l'ossature par des dispositifs d'extension et de rétraction extensibles et rétractables dans la direction perpendiculaire aux directions d'entraînement en vue de rapprocher et éloigner mutuellement ce groupe et l'ossature sélectivement, caractérisée en ce qu'elle comporte en outre des bras extensibles et rétractables dans l'une des deux directions d'entraînement auxquels des organes d'appui sur le sol sont solidarisés par des dispositifs d'extension et de rétraction extensibles et rétractables dans ladite direction perpendiculaire aux directions d'entraînement afin d'éloigner et rapprocher sélectivement les organes d'appui desdits bras.

Grâce à ces caractéristiques, il est possible de créer une plate-forme porteuse sous la forme d'un véhicule à plateau élévateur, comportant des bras déployables latéralement adaptés à prendre appui en contrebas par l'intermédiaire d'organes eux-mêmes déployables vers le bas, de telle sorte que le véhicule puisse se déplacer d'un quai à une voie en contrebas tout d'abord latéralement en étant supporté initialement par le quai par l'intermédiaire de son premier groupe de moyens d'entraînement puis progressivement par la voie au moyen de ses organes d'appui déployés depuis ses bras latéraux, et ensuite verticalement de haut en bas par rétraction des organes d'appui, et inversement.

La plate-forme ainsi créée est notamment extrêmement compacte, facile d'emploi, et manoeuvrable par un unique opérateur.

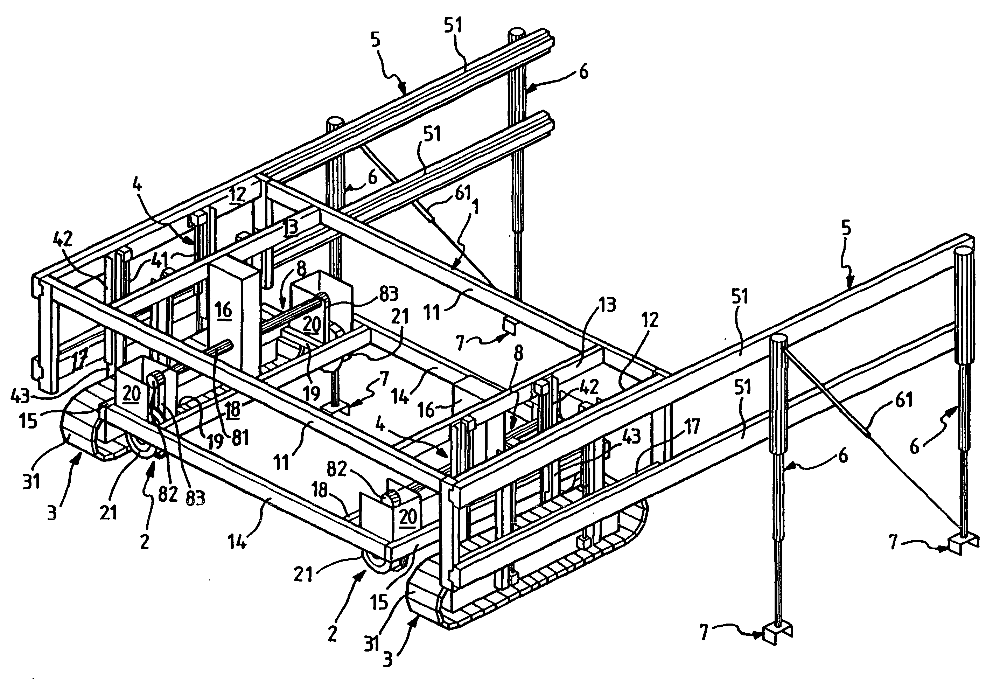

D'autres caractéristiques et avantages de l'invention ressortiront de la description qui va suivre d'une forme de réalisation de cette invention donnée à titre d'exemple non limitatif, et qui est représentée sur le dessin ci-joint lequel est une vue schématique en perspective de'cette forme de réalisation.

La plate-forme représentée sur la figure est plus particulièrement conçue pour pouvoir se déplacer d'un quai jouxtant une voie ferrée s'étendant en contrebas, à cette voie ferrée, puis sur la voie ferrée elle-même, et inversement.

Cette plate-forme est donc en fait un véhicule, destiné à porter des machines sur un plateau non représenté afin de rendre plus aisée la lecture du dessin, ce plateau étant fixé sur l'ossature 1 de la plate-forme. Devant être automotrice, elle comporte des moyens moteurs reliés mécaniquement aux moyens d'entraînement, ces moyens moteurs n'étant également pas représentés pour ne pas surcharger le dessin.

Les moyens d'entraînement de la plate-forme, destinés à assurer le déplacement de celle-ci sur le sol, sont répartis en au moins deux groupes 2, 3. L'un des groupes est destiné à entraîner la plate-forme dans une première direction que l'on désignera dans la suite par "direction longitudinale", et qui est celle dans laquelle s'étend la voie ferrée. Le deuxième groupe 3 est destiné à entraîner la plate-forme dans une deuxième direction que l'on désignera dans la suite par "direction transversale", et qui est perpendiculaire à la première direction. Au moins l'un des groupes, ici le deuxième groupe 3, est relié à l'ossature par des dispositifs d'extension et de rétraction 4 comprenant des vérins hydrauliques 41 et des glissières 42 et coulisseaux 43 de guidage dont l'axe longitudinal s'étend perpendiculairement aux deux directions d'entraînement, c'est-à-dire verticalement lorsque le véhicule repose sur un sol horizontal ; ainsi, lorsque ce deuxième groupe 3 de moyens d'entraînement repose sur le sol, l'ossature 1 peut être élevée et abaissée sous l'action des dispositifs d'extension et de rétraction 4, et lorsque ces moyens sont très rétractés, ce ne sont plus les moyens d'entraînement du deuxième groupe qui reposent sur le sol mais ceux du premier groupe 2, les moyens d'entraînement du deuxième groupe étant alors suspendus à l'ossature sous celle-ci.

L'ossature porte par ailleurs deux bras 5 extensibles et rétractables s'étendant dans la direction d'entraînement du deuxième groupe 3 de moyens d'entraînement ("direction transversale"). Ces bras sont ici constitués chacun de deux longerons 51 disposés l'un au-dessus de l'autre et montés coulissants par rapport à l'ossature comme on le verra dans la suite, de telle sorte que si l'ossature 1 est maintenue fixe, les bras 5 puissent être déployés dans la direction transversale, d'un côté ou de l'autre de l'ossature, et que si les bras sont maintenus fixes par exemple sensiblement horizontalement à une certaine distance du sol, l'ossature puisse coulisser entre ceux-ci dans l'un ou l'autre sens de cette direction, en appui sur le deuxième groupe de moyens d'entraînement et entraînée par les moyens moteurs, ou suspendue aux bras et entraînée par exemple par des vérins hydrauliques (non représentés) s'étendant eux-mêmes dans la même direction et fixés chacun d'un côté à un bras et de l'autre à l'ossature.

Les bras 5 portent chacun, par l'intermédiaire de dispositifs d'extension et de rétraction 6, des organes 7 par lesquels ils peuvent prendre appui sur sol sans basculer lorsque l'ossature est suspendue à eux, même en porte-à-faux. Ces organes 7 sont destinés à prendre appui sur les rails de la voie ferrée, et chacun des deux bras 5 porte deux de ces dispositifs d'extension et de rétraction 6 à proximité de l'une de ses extrémités, écartés le long du bras d'une distance telle que les deux organes d'appui 7 correspondants viennent enserrer respectivement les rails de sorte que la plate-forme ne bascule pas lorsque l'ossature 1 est suspendue aux bras à l'extérieur de l'intervalle compris entre les dispositifs d'extension et de rétraction 6. Les dispositifs d'extension et de rétraction auxquels sont solidarisés les organes d'appui 7 s'étendent perpendiculairement aux bras, c'est-à-dire aux directions d'entraînement, et ainsi approximativement en direction verticale lorsque la plate-forme repose sur un sol approximativement horizontal, de telle sorte que, par extension ou rétraction de ces dispositifs 6, les organes d'appui puissent être éloignés ou rapprochés des bras, et que si les organes 7 enserrent fermement des rails et si les dispositifs d'extension et de rétraction sont suffisamment déployés, l'ossature puisse être soulevée par l'intermédiaire de ses bras 5, comme on le verra mieux dans la suite.

Plus précisément, l'ossature 1 de la plate-forme comporte un bâti constitué de trois cadres formant un pont ayant un cadre central de forme générale rectangulaire dont les petits côtés constituent les grands côtés supérieurs respectifs de deux cadres latéraux également rectangulaires et s'étendant perpendiculairement au cadre central face à face et symétriquement. La direction dans laquelle s'étendent les deux grands côtés ou longerons 11 du cadre est la direction longitudinale du véhicule constitué par la plate-forme. Parallèlement et à proximité de chacun des deux petits côtés de ce grand cadre (traverses d'extrémités 12), s'étendent deux traverses intermédiaires 13 dont le rôle outre celui de rigidifier le cadre central, sera exposé plus loin. L'ossature comporte également un quatrième cadre de forme générale rectangulaire suspendu au cadre central parallèlement à celui-ci, dont les grands côtés ou longerons 14 sont parallèles à ceux du cadre central à la verticale de ceux-ci et dont les petits côtés ou traverses d'extrémité 15 sont parallèles à ceux du cadre central à la verticale de ses traverses intermédiaires 13. Les traverses d'extrémités 15 du cadre inférieur suspendu de plus faible longueur que le cadre central du bâti sont fixées aux traverses intermédiaires de celui-ci par l'entremise de poutres 16 d'entretoisement, approximativement au même niveau que les grands côtés inférieurs 17 des cadres latéraux. Le cadre inférieur peut lui-même comporter des traverses intermédiaires 18 de rigidification ; chacune des deux traverses intermédiaires 18 les plus proches des traverses d'extrémité 15 sont elles-mêmes reliées à la traverse d'extrémité la plus proche par deux entretoises 19 parallèles aux longerons.

Le premier groupe d'entraînement 2, destiné à entraîner la plate-forme dans la direction longitudinale, est constitué de roues à boudin 21, au nombre de quatre, utilisées classiquement en tant qu'organes de roulement sur les voies ferrées. La région centrale des roues à boudin 21 est logée dans l'espace compris entre une entretoise 19 et le longeron 14 qui lui fait face, du cadre inférieur, et leur axe de rotation est porté par ce cadre inférieur ou par un carter de protection 20 replié en forme de chape dont le fond est accolé à la traverse d'extrémité 15 la plus proche et les parois latérales sont respectivement contre l'entretoise 19 et le longeron 14 ; chaque paire de roues à boudin 21 constituée d'une roue gauche et d'une roue droite est entraînée en rotation par les moyens moteurs (moteur thermique ou électrique) par l'intermédiaire d'une transmission 8 respective comprenant un arbre menant transversal 81, portant en bout deux poulies 82 (une poulie par roue), une poulie calée sur le même axe que chaque roue (non visible sur le dessin), et une courroie de transmission 83 correspondante (par exemple une courroie crantée) reliant la poulie 82 de l'arbre menant à celle de l'axe de la roue 21. De même que la partie supérieure de chaque roue à boudin 21, la poulie calée sur le même axe, celle portée en regard par l'arbre menant 81 correspondant, et la courroie de transmission 83, sont logées entre les parois latérales du carter de protection 20, lequel s'étend vers le haut depuis le cadre inférieur, en direction du grand cadre supérieur. Les arbres menants 81 sont portés dans des paliers prévus dans les poutres d'entretoisement 16 et dans les parois latérales des carters de protection 20 des roues et de leur transmission.

Le deuxième groupe d'entraînement 3, destiné à entraîner la plate-forme dans la direction transversale, doit pouvoir assurer l'entraînement de celle-ci en direction de la voie et son soutien par le quai le plus longtemps possible lors de sa progression vers la voie, et même alors qu'elle surplombe largement celle-ci, afin de limiter l'effort exercé sur les bras 5, les dispositifs d'extension et de rétraction 6 qu'ils portent, et leurs organes d'appui 7, par la masse en porte-à-faux de la plate-forme. Ainsi, plutôt que de constituer le deuxième groupe d'entraînement 3 de quatre roues, il a été trouvé avantageux de le constituer de deux trains à chenille 31 s'étendant transversalement à la plate-forme, chacun à la verticale en-dessous de l'un des espaces compris entre une traverse d'extrémité 12 du cadre supérieur et la traverse intermédiaire 13 la plus proche. Les chenilles 31 sont montées chacune autour d'un support de part et d'autre duquel sont fixés les coulisseaux 43 ajustés à l'intérieur des glissières 42, déjà mentionnés, lesquelles glissières sont fixées à la traverse d'extrémité 12 la plus proche appartenant au grand cadre supérieur et au grand côté inférieur 17 du cadre latéral correspondant, pour les glissières côté extérieur, et à la traverse intermédiaire 13 du grand cadre ainsi qu'à la traverse d'extrémité 15 du petit cadre inférieur correspondante, pour les glissières côté intérieur. A chaque ensemble glissière 42-coulisseau 43, est associé un vérin 41 dont le corps est fixé aux mêmes organes que la glissière correspondante et dont la tige est fixée au support de la chenille 31.

Il est cependant possible de prévoir que ce deuxième groupe d'entraînement 3 soit fixe et que ce soit le premier groupe 2, d'entraînement longitudinal, qui soit fixé à l'ossature 1 par des dispositifs d'extension et de rétraction ; il est également possible de prévoir que les deux groupes d'entraînement soient extensibles et rétractables par rapport à l'ossature.

Les longerons 51 de chaque bras extensible et rétractable sont portés à l'extérieur de l'ossature l'un par la traverse d'extrémité 12 du grand cadre supérieur et l'autre par le grand côté inférieur 17 du cadre latéral correspondant. Ces longerons 51 peuvent être en une seule pièce et comporter chacun un coulisseau longitudinal mobile le long d'une glissière de la traverse 12, 17 de l'ossature disposée vis-à-vis, où la glissière et le coulisseau peuvent être inversés, ou encore les longerons 51 des bras 5 peuvent être télescopiques. Ces longerons peuvent être reliés par des entretoises, ou seulement par les dispositifs d'extension et de rétraction 6 auxquels sont fixés les organes d'appui 7 sur les rails. Le mouvement des longerons 51 des bras 5 est ici dû à des vérins non représentés.

Les dispositifs d'extension et de rétraction 6 fixés aux bras 5 et munis d'organes d'appui 7 sur les rails sont des vérins hydrauliques à tige télescopique dont le cylindre est fixé aux deux longerons 51 d'un même bras sur la face de ces longerons qui est à l'opposé de l'ossature 1, perpendiculairement aux longerons 51 de telle sorte que l'extension des tiges de vérin s'effectue verticalement vers le bas lorsque la plate-forme repose sur un sol horizontal. Chaque bras 5 porte donc deux vérins 6 écartés de la même distance que les rails de la voie, et l'extrémité libre de la tige de chaque vérin porte l'organe d'appui 7 sous la forme d'une pince (représentée très schématiquement sur les dessins) adaptée à enserrer fermement le rail sans risque de glissement autour de celui-ci, qui serait susceptible d'entraîner une inclinaison des vérins 6 de part ou d'autre de la verticale sous l'action du couple dû à la masse importante pouvant être en porte-à-faux d'un côté des bras 5 lorsque la plate-forme n'est pas exactement à la verticale de la voie. Afin de restreindre encore ces risques d'inclinaison, les vérins 6 peuvent être reliés par des barreaux de contreventement 61 les reliant en oblique ; pour que le contreventement soit très efficace, le haut du cylindre d'un vérin est relié au bas de la tige du vérin voisin ; comme l'inclinaison et la longueur du barreau 61 doivent être variables en fonction de l'élongation des vérins, ce barreau 61 est articulé à ses extrémités sur le cylindre et sur la tige des vérins respectifs auxquels il est fixé, et télescopique ; le "figeage" du barreau à la longueur désirée est commandé par électro-aimant(s). Les vérins peuvent être commandés pour prendre une élongation différente, si une pente du plateau est souhaitée, ou au contraire pour compenser un dévers de la voie ferrée ou/et du quai.

Les longerons et traverses constituant le contour extérieur de l'ossature 1 et des bras 5 peuvent avantageusement être munis d'organes d'accrochage (non représentés) destinés à supporter des bâches ou des panneaux que l'on accroche ainsi à l'ossature et aux bras lorsque la plate-forme, n'étant pas en service, par exemple pendant les périodes de trafic ferroviaire normal, est entreposée sur un quai, afin de la dissimuler au regard du public. Ces bâches ou panneaux peuvent être par exemple des bandeaux ou panneaux publicitaires. Des organes d'accrochage peuvent également être prévus pour solidariser, autour de la plate-forme, des organes d'appui complémentaires augmentant la surface d'appui sur le quai, lorsque celui-ci est estimé être d'une résistance insuffisante.

La plate-forme peut également être munie d'organes de solidarisation pour un plan incliné, permettant le transfert d'une machine depuis le plateau porté par l'ossature jusqu'à la voie, lorsque la plate-forme est elle-même sur la voie, et inversement.

Lorsque l'on désire intervenir sur la voie, on décroche les bâches ou les panneaux extérieurs, on actionne les moyens moteurs, on amène la plate-forme à l'emplacement du quai désiré, au bord de la voie, en actionnant tour à tour le groupe d'entraînement longitudinal 2 et le groupe d'entraînement transversal 3 après avoir mis les moyens d'entraînement 21, 31 souhaités en contact avec le sol par extension ou rétraction des dispositifs d'extension et de rétraction 4 reliant l'ossature 1 aux moyens d'entraînement en direction transversale 31, on étend les bras 5 au-dessus de la voie orthogonalement à celle-ci, on étend vers le bas les dispositifs d'extension et de rétraction 6 munis des organes d'appui 7 sur la voie, et on ajuste la longueur des bras 5 de telle sorte que les organes d'appui 7 puissent enserrer les rails, on actionne les moyens d'entraînement 31 en direction transversale (chenilles) de telle sorte que, reposant sur le quai, ils entraînent l'ossature 1 au-dessus de la voie, on poursuit le mouvement transversal de l'ossature 1 au moyen des vérins d'actionnement des bras 5 lorsque les moyens d'entraînement en direction transversale 31 ont quitté le sol du quai, jusqu'à ce que le bord du plateau non représenté soit à la verticale du bord du quai, on rétracte les dispositifs d'extension et de rétraction 6 munis des organes d'appui 7 jusqu'à ce que le plateau soit au même niveau que le quai et juxtaposé à celui-ci, on transfère la machine d'intervention du quai au plateau, on poursuit le mouvement transversal de l'ossature 1 jusqu'à ce qu'elle soit centrée à la verticale des rails, on poursuit le mouvement vertical vers le bas jusqu'à ce que le groupe d'entraînement 2 en direction longitudinale (roues à boudin) vienne en appui sur les rails, on desserre les pinces 7 et on poursuit la rétraction jusqu'à ce que ces pinces s'éloignent des rails par le haut, on actionne le groupe d'entraînement 2 en direction longitudinale jusqu'au lieu de l'intervention, si nécessaire on met en place le plan incliné destiné à relier le plateau à la voie, et on transfère la machine sur la voie. Le transfert de la machine et de la plate-forme de la voie au quai sont effectués en inversant l'ordre et le sens des opérations. Pour transférer la plate-forme d'une voie à une autre, il est utile de disposer des goulottes transversalement aux voies.

Bien entendu, l'invention n'est pas limitée à la forme de réalisation ci-dessus décrite et représentée, et on pourra en prévoir d'autres formes sans sortir de son cadre.

## Revendications

1. Plate-forme porteuse automotrice pour le franchissement de dénivellations en degré, du type comprenant une ossature (1), des moyens moteurs, et, solidarisés à l'ossature (1), au moins deux groupes (2, 3) de moyens d'entraînement (21, 31) actionnables par les moyens moteurs pour déplacer la plate-forme sur le sol et l'entraîner sélectivement respectivement dans au moins deux directions différentes, les moyens d'entraînement (31) d'au moins l'un des groupes (2, 3) étant solidarisés à l'ossature par des dispositifs d'extension et de rétraction (4) extensibles et rétractables dans la direction perpendiculaire aux directions d'entraînement en vue de rapprocher et éloigner mutuellement ce groupe (3) et l'ossature (1) sélectivement, **caractérisée en ce qu'**elle comporte en outre des bras (5) extensibles et rétractables dans l'une des deux directions d'entraînement auxquels des organes (7) d'appui sur le sol sont solidarisés par des dispositifs d'extension et de rétraction (6) extensibles et rétractables dans ladite direction perpendiculaire aux directions d'entraînement afin d'éloigner et rapprocher sélectivement les organes d'appui (7) desdits bras (5).

2. Plate-forme selon la revendication 1, **caractérisée en ce que** l'ossature (1) comporte un bâti formant un pont ayant un cadre central (11, 12), et un cadre (14, 15) suspendu au cadre central parallèlement à celui-ci.

3. Plate-forme selon la revendication 1, **caractérisée en ce que** le premier groupe (2) de moyens d'entraînement comporte des roues à boudin (21) pour entraîner la plate-forme en direction longitudinale.

4. Plate-forme selon la revendication 1, **caractérisée en ce que** le deuxième groupe (3) de moyens d'entraînement comporte des chenilles (31) pour entraîner la plate-forme en direction transversale.

5. Plate-forme selon la revendication 1, **caractérisée en ce que** le deuxième groupe (3) de moyens d'entraînement est solidarisé à l'ossature (1) par des dispositifs d'extension et de rétraction (4) comportant des vérins (41).

6. Plate-forme selon la revendication 1, **caractérisée en ce que** les bras extensibles et rétractables (5) comportent des longerons (51) solidarisés à coulissement à des traverses (12 , 17) de l'ossature.

7. Plate-forme selon la revendication 1, **caractérisée en ce que** les dispositifs d'extension et de rétraction (6) pour solidariser les organes d'appui (7) sur le sol, aux bras extensibles et rétractables (5), sont des vérins.

8. Plate-forme selon la revendication 1, **caractérisée en ce que** les organes d'appui (7) sur le sol solidarisés aux bras extensibles et rétractables (5) par des dispositifs d'extension et de rétraction (6) comportent des pinces adaptées à enserrer des rails.

9. Plate-forme selon la revendication 1, **caractérisée en ce que** des éléments, tels que des longerons et des traverses, de l'ossature (1) ou des bras extensibles et rétractables (5), sont munis d'organes d'accrochage pour supporter des bâches ou des panneaux.

10. Plate-forme selon la revendication 1, **caractérisée en ce que** les dispositifs d'extension et de rétraction (6) pour solidariser les organes d'appui (7) sur le sol, aux bras extensibles et rétractables (5), fixés à un même bras, sont reliés par des barreaux de contreventement (61).

## Claims

1. Self-propelling carrying platform for traversing stepped changes in level, of the type comprising a framework (1), motor means and, connected to the framework (1), at least two groups (2, 3) of driving means (21, 31) which can be activated by the motor means in order to displace the platform on the ground and to drive it selectively in at least two different directions, the driving means (31) of at least one of the groups (2, 3) being connected to the framework by extension and retraction devices (4) which are extensible and retractable in the direction perpendicular to the driving directions in order to draw together and apart the group (3) and the framework (1) selectively, **characterised in that** it further comprises arms (5) which are extensible and retractable in one of the two driving directions and to which members (7) for bearing on the ground are connected by extension and retraction devices (6) which are extensible and retractable in the direction perpendicular to the driving directions in order to draw apart and together selectively the support members (7) of the arms (5).

2. Platform according to claim 1, **characterised in that** the framework (1) comprises a supporting structure which forms a bridge having a central frame (11, 12) and a frame (14, 15) which is suspended on the central frame parallel therewith.

3. Platform according to claim 1, **characterised in that** the first group (2) of driving means comprises flanged wheels (21) in order to drive the platform in a longitudinal direction.

4. Platform according to claim 1, **characterised in that** the second group (3) of driving means comprises caterpillar tracks (31) in order to drive the platform in a transverse direction.

5. Platform according to claim 1, **characterised in that** the second group (3) of driving means is connected to the framework (1) by extension and retraction devices (4) which comprise jacks (41).

6. Platform according to claim 1, **characterised in that** the extensible and retractable arms (5) comprise side rails (51) which are slidingly connected to crosspieces (12, 17) of the framework.

7. Platform according to claim 1, **characterised in that** the extension and retraction devices (6) for connecting the members (7) for bearing on the ground to the extensible and retractable arms (5) are jacks.

8. Platform according to claim 1, **characterised in that** the members (7) for bearing on the ground which are connected to the extensible and retractable arms (5) by extension and retraction devices (6) comprise grippers which are adapted to grip round rails.

9. Platform according to claim 1, **characterised in that** elements, such as side rails and crosspieces, of the framework (1) or extensible and retractable arms (5) are provided with coupling members for supporting containers or panels.

10. Platform according to claim 1, **characterised in that** the extension and retraction devices (6) for connecting the members (7) for bearing on the ground to the extensible and retractable arms (5), which are fixed to the same arm, are connected by cross-bracing bars (61).

## Patentansprüche

1. Selbstfahrende Trageplattform für die Überwindung von stufenförmigen Höhenunterschieden, der Art, dass die Trageplattform aus einem Gerüst (1), Antriebsanlagen und mindestens zwei, mit dem Gerüst (1) verbundenen Gruppen (2,3) von Fortbewegungsmitteln (21,31) besteht, welche durch die Antriebsanlagen angetrieben werden können, um die Plattform auf dem Boden zu verstellen und sie selektiv beziehungsweise in mindestens zwei verschiedene Richtungen zu bewegen, wobei die Fortbewegungsmittel (31), zumindest eine der Gruppen (2,3), mit dem Gerüst durch Aus- und Einfahrvorrichtungen (4) verbunden sind, welche in der senkrechten Richtung zur Bewegungsrichtung aus- und einfahrbar sind, um diese Gruppe (3) und das Gerüst (1) wechselseitig einander selektiv anzunähern und voneinander zu entfernen, wobei die selbstfahrende Plattform **dadurch gekennzeichnet ist, dass** sie darüber hinaus in eine der beiden Bewegungsrichtungen aus- und einfahrbare Ausleger (5) hat, mit welchen Bodenstützen (7) durch Aus- und Einfahrvorrichtungen (6) fest verbunden sind, welche in der besagten senkrechten Richtung zur Bewegungsrichtung aus- und einfahrbar sind, um die Stützen (7) selektiv von den besagten Auslegern (5) zu entfernen und wieder an sie heranzuziehen.

2. Plattform nach Anspruch 1, **dadurch gekennzeichnet, dass** das Gerüst (1) ein Gestell umfasst, welches eine Brücke aus einem zentralen Rahmen (11,12) und einem Rahmen (14,15) bildet, welcher am zentralen Rahmen parallel zu diesem aufgehängt ist.

3. Plattform nach Anspruch 1, **dadurch gekennzeichnet, dass** die erste Gruppe (2) der Fortbewegungsmittel mit Eisenbahnrädern (21) ausgestattet ist, um die Plattform in Längsrichtung zu bewegen.

4. Plattform nach Anspruch 1, **dadurch gekennzeichnet, dass** die zweite Gruppe (3) der Fortbewegungsmittel mit Ketten (31) ausgestattet ist, um die Plattform in Querrichtung zu bewegen.

5. Plattform nach Anspruch 1, **dadurch gekennzeichnet, dass** die zweite Gruppe (3) der Fortbewegungsmittel mit dem Gerüst (1) durch Aus- und Einfahrvorrichtungen (4) verbunden ist, welche aus Hebevorrichtungen (41) bestehen.

6. Plattform nach Anspruch 1, **dadurch gekennzeichnet, dass** die aus- und einfahrbaren Ausleger (5) mit Längsstreben (51) ausgestattet sind, welche verschiebbar mit den Querstreben (12,17) des Gerüsts verbunden sind.

7. Plattform nach Anspruch 1, **dadurch gekennzeichnet, dass** die Aus- und Einfahrvorrichtungen (6), welche dazu dienen, die Bodenstützen (7) an den aus- und einfahrbaren Ausleger (5) zu befestigen, aus Hebevorrichtungen bestehen.

8. Plattform nach Anspruch 1, **dadurch gekennzeichnet, dass** die Bodenstützen (7), welche durch Aus- und Einfahrvorrichtungen (6) mit den aus- und einfahrbaren Auslegern (5) fest verbunden sind, aus Zangen bestehen, welche geeignet sind, Schienen zu umfassen.

9. Plattform nach Anspruch 1, **dadurch gekennzeichnet, dass** die Elemente, wie die Längs- und Querstreben, das Gerüst (1) oder die aus- und einfahrbaren Ausleger (5) mit Aufhängvorrichtungen ausgestattet sind, um Planen oder Schilder tragen zu können.

10. Plattform nach Anspruch 1, **dadurch gekennzeichnet, dass** die Aus- und Einfahrvorrichtungen (6), welche dazu dienen, die Bodenstützen (7) mit den aus- und einfahrbaren Auslegern (5) fest zu verbinden und welche an demselben Ausleger befestigt sind, durch Verstärkungsstangen (61) miteinander verbunden sind.
